# EUROPEAN PATENT APPLICATION

(11) **EP 3 178 600 A1**
(43) Date of publication of application: **14.06.2017**
(21) Application number: 15382616.9
(22) Date of filing: 11.12.2015
(51) Int. Cl.: B23K 20/12

(54) **METHOD FOR WELDING TOGETHER DISSIMILAR PARTS**

(71) Applicant: LORTEK S. COOP., 20240 Ordizia (Gipuzkoa) (ES)
(72) Inventor: ALDANONDO BEGIRISTAIN, Egoitz, 20240 Ordizia (GUIPÚZCOA) (ES); ESTÉVEZ IRIZAR, Pedro, 20200 Beasain (GUIPÚZCOA) (ES)
(74) Representative: Carpintero Lopez, Francisco

(57) **Abstract**

A method for welding together dissimilar parts comprising the following steps: a) arranging a pair of dissimilar parts, by positioning the first dissimilar part (1) on the second dissimilar part (2), thus defining a joining area therebetween; b) positioning a rotary tool (3) on the first part (1) and in line with said joining area therebetween; c) performing a continuous rotating movement of the tool (3) rotating about a revolution axis thereof; a penetration movement of the rotary tool (3) to penetrate the thickness of the portion of the first dissimilar part (1) and, at most, 1 mm of the thickness of the second dissimilar part (2); and an advancing movement of the rotary tool (3) along the joining area between the two parts; resulting in the friction stir welding of the joining area therebetween.

## Description

### TECHNICAL FIELD OF THE INVENTION

The present invention relates to a method for welding together dissimilar parts, and the thus obtained unitary piece pertaining to the sector of physical and structural joining of two or more dissimilar parts, understanding the concept of dissimilar parts in welded joints as pieces which have different physical and mechanical properties that hinder their welding by conventional methods.

The method for welding together dissimilar parts object of the invention primarily aims to describe and present a welding method suitable for joining two or more dissimilar parts of any dimension in a simple and fast way, ensuring a perfect structural joint between each part for the strength and security of the piece to different applied loads; and obtaining a unitary piece that unites the physical and mechanical characteristics of each piece such as lightness and a very high mechanical strength; regardless of the size and volume of the unitary piece to be obtained, and all with a method that has a series of well-defined, industrially applicable and novel to the state of the art known to date stages.

### BACKGROUND OF THE INVENTION

By way of introduction, and basically due to the great demands required in the use of materials with high mechanical characteristics and low weight, the technological advance and the requirements of industrial components have resulted, along the years, in increased requirements in terms of lightness of the parts that make up most industrial components and especially transport element components, such as cars, bikes, rail vehicles, naval structures, etc. Such imposition has its raison d'être mainly in obtaining a light transport means so that the power needed to make it move is as low as possible, resulting in reduced fuel consumption and hence, emissions of smaller magnitude.

In this regard, it is known how such requirements have led to a transition from the original manufacturing materials (iron, steel) to lighter materials, which, however, provide a poorer performance against mechanical stresses (aluminium, certain plastics, composites, etc.). In this transition, the use of both types of materials together has been contemplated, not only in the separate making of the parts in one or other material and their subsequent constructive bonding, but also in the manufacture of unitary parts in which both materials are used. The creation of these parts with different materials requires joining them, which is what is usually called joining of dissimilar materials, in order to have a unitary part comprising both materials and the synergy of their mechanical and physical properties.

As for the joining of dissimilar materials, and particularly in the joining of steel and aluminium which is one of the most used and desired joints at present, various joining techniques are known. See for example the mechanical joint between both materials which is contained in the patent US7267736, which describes how the joining between both materials is carried out through mechanical joining means between them, in this particular example, the joining means are rivets, so that said joining is made by inserting a rivet under pressure between the two dissimilar materials, for subsequently applying an electric current to melt part of the rivet and part of the steel part.

Another example of joining between dissimilar materials known in the state of the art, and connected with a welded joint, is described in the patent application US2010089977, in which a method of joining dissimilar parts by friction stir welding is described, so that on a first dissimilar part a thin layer of material from the second dissimilar part is applied thereon, and on that area impregnated and/or bathed in said material the welding of the second dissimilar part on the first part is allowed by paying particular attention to not exceed the impregnated layer during the welding between the two parts.

Another solution known in the state of the art refers to the use of an intermediate part between each of the dissimilar parts, wherein the intermediate part is formed on one side of the material of the first dissimilar part, and on the other side of the material of the second dissimilar part, forming said second part in various ways, such as by explosion welding. Thus, the side with the material of the first dissimilar part is placed in line with the first dissimilar part, to proceed to its welding by a conventional method; and similarly the side with the material of the second dissimilar part is placed in line with the second dissimilar part, to proceed to its welding also by a conventional method.

When joining large dissimilar parts, an explosion welding process or the mechanical joining of both parts must be used. However using explosion welding has serious drawbacks, such as requiring the use of explosives, fitting out a bunker, obtaining the necessary permits, limited production, etc. And in the case of wanting to make a mechanical joining between respective parts, this implies the need to pierce the parts, as well as presenting difficulties in the automation of the joining process and the use of long periods of manufacturing time of the part to be joined.

That is why, in view of the main drawbacks related to the difficulty of structural welding and joining between dissimilar parts, and more specifically between large parts, a new method for welding together dissimilar parts able to solve these drawbacks is needed, which is able to simplify the method of physical and structural joining between respective parts, and all in a simple and rapid way, guaranteeing a perfect structural joint between respective parts to resist the various loads applied; and obtaining a unitary part that unites the physical and mechanical characteristics of respective parts such as lightness and a very high mechanical strength.

### DESCRIPTION OF THE INVENTION

The present invention relates to a method for welding together dissimilar parts, which comprises the following steps:
a) arranging a pair of dissimilar parts on a work surface, by positioning a portion of the first dissimilar part on a portion of the second dissimilar part, thus defining a joining area between the two parts;
b) positioning a rotary tool on the first dissimilar part and in line with the joining area between both parts;
c) performing a continuous rotating movement of the rotary tool about a revolution axis of said tool;
d) performing a penetration movement of the rotary tool until penetrating the thickness of the portion of the first dissimilar part and, at most, 1 mm thickness of the portion of the dissimilar second part, wherein said penetration movement is combined with the continuous rotation movement of the tool; and
e) performing an advancing movement of the rotary tool along the joining area between the two parts, wherein said advancing movement is combined with the continuous rotation movement of the tool; resulting in friction stir welding of the joining area between the two dissimilar parts and obtaining a unitary part formed of two dissimilar parts.

It should be noted that the method, subject matter of the invention, describes, in step a), the placement and arrangement of a pair of dissimilar parts on a work surface, in which the operation of friction stir welding is performed; so that a portion of the first dissimilar part is positioned on a portion of the second dissimilar part by defining a joining area between the two parts; since logically, the dissimilar parts must be one upon the other, defining the said joining area between both parts. Then step b), in which the rotary tool is positioned on the first dissimilar part and in line with said joining area between the two parts, is described. It is important to note that it is positioned on the first dissimilar part and not on the second, since as is indicated, the tool itself has three associated movements: a rotation movement, one of penetration and one of advance; and the penetration is carried out in a range of penetration between at least the thickness of the first dissimilar part, but not more than the thickness of the first dissimilar part plus 1 mm of the second dissimilar part; because, as is indicated in step d), performance of the penetration movement of the rotary tool is proceeded until penetrating the thickness of the portion of the first dissimilar part and, at the most, 1 mm thickness of the second dissimilar part, wherein said penetration movement is combined with the continuous rotation movement of the tool achieving the heating and softening of the material of the interface between the first dissimilar part and the second dissimilar part, thus achieving the welding between both parts.

In a non limiting way, the rotational movement of the tool can be performed at the same time as the penetration movement thereof on the first dissimilar part; and therefore the option in which steps c) and d) are performed simultaneously may be contemplated.

The technical feature described in step d), which refers to the penetration of the tool on the first dissimilar part along the thickness of said dissimilar part and at most 1 mm thickness of the second dissimilar part is of vital importance as it is intended that the material of the interface between the first dissimilar part and the second dissimilar part is heated and softens, thus obtaining a structural joining by welding between both parts, without melting the material of the second dissimilar part, so it is a novel welding method, which is almost non intrusive, highly effective and industrially applicable in large dissimilar parts, such as the chassis of a car, a motorcycle, a railway car, etc.

Logically, a unitary spot weld of the joining area between both parts is not useful for the purpose of manufacturing high mechanical strength parts, but it is necessary to perform the welding along one direction; and therefore, in step e) it is described that it is necessary to perform the forward movement of the rotary tool along the joining area between the two parts, wherein said advancing movement is combined with the continuous rotation movement of the tool; resulting in said friction stir welding of the joining area between the two dissimilar parts, obtaining a unitary part formed by the two dissimilar parts.

To continue with the forming of the thus obtained unitary part, and considering that the joining between dissimilar parts is made, first, between the joining area region between the two dissimilar parts, the preferred option is contemplated in which following step e), and after removal of the rotating tool from the joining area between the two dissimilar parts, the method comprises the following steps:
f) welding at least part of the first dissimilar part pertaining to the unitary part to a third part similar to the material of said first dissimilar part, through a conventional weld joining, by fusion; and/or
g) welding at least part of the second dissimilar part pertaining to the unitary part, to a fourth part similar to the material of said second dissimilar part, through a conventional weld joining by fusion.

In this way, and once made the welding steps of the joining area between the two dissimilar parts through the rotary tool and its movements of rotation, penetration and advancement, the structural and physical joining between the two dissimilar parts has been completed, leading to the unitary part; but that unitary part may require adding additional welded parts to it, which may have the same material as the first dissimilar part, or the same material as the second dissimilar part; therefore steps f) and g) are defined, in which the additional parts to be welded on the unitary part are welded to the unitary part by conventional welding methods, because, in this case, an interface formed by a first material which is dissimilar from a second material will not be weld joined, since said type of weld is made using the method subject matter of the invention and contained in its steps a), b), c), d) and e).

In this sense, and with regard to the conventional welding method of steps f) and g), this method for welding together parts can be performed through fusion welding, such as arc welding, resistance welding, laser, welding or gas welding; all known in the state of the art, and which do not cause problems or disadvantages between similar materials as is the case indicated.

For the purpose of clarification, it should be noted that the method subject matter of the invention also has as subject matter the manufacture of a part obtained thanks to the welded joint between dissimilar and similar parts, resulting in welded parts of large dimensions, where the term large is relative to the location and facilities where the welding of each part takes place, but where in general, the welding of large parts is extremely difficult because it is not possible to place them in a friction stir welding machine so as to produce and perform said type of welding. Furthermore, the parts must have a great stability and support, which is practically impossible except in very large facilities and, therefore, very difficult to maintain and make profitable.

In a preferred embodiment, the possibility that the material of the first dissimilar part is aluminium and the material of the second dissimilar part is steel is emphasised. So that the unitary part created by the joining of two materials has a low weight, this being a characteristic associated with aluminium; and high mechanical characteristics associated, in this case, with steel. And wherein said mixture is in high demand in sectors such as transport, since a low vehicle weight is sought so that its fuel demand is reduced, and hence its emissions; but also high mechanical characteristics are sought associated with strength, elasticity and breaking point due to possible impacts and mechanical stresses associated with the movements of the vehicle body in question.

Paying particular attention to the configuration of the rotary tool, the option in which said rotary tool comprises a penetration head is described, which is called pin according to the standard UNE EN ISO 25239. It is configured so that during step d) of penetration of the tool down to the thickness of the first dissimilar part and, at most, 1 mm of the thickness of the second dissimilar part, the penetration head penetrates the first dissimilar part until the surface adjacent to the penetration head of the tool comes into contact with the outer surface of the first dissimilar part, opposite to the the surface in contact with the second dissimilar part. Where, in an explanatory way, the surface adjacent to the penetration head is known as the shoulder of the tool; so that for a welding in series of dissimilar parts, the thickness of the first dissimilar part is known, thus the height of the head can be designed such that the non penetration of the tool in the second dissimilar part can be ensured all the time, or that it penetrates at most 1 mm in the second dissimilar part, since once the shoulder of the tool contacts the outer surface of said first dissimilar part, the maximum penetration depth of the head is implicitly defined with respect to the first dissimilar part; being a simple and effective solution to ensure complete penetration of the tool into the first dissimilar part, and also the penetration, at most, 1 mm into the second dissimilar part.

Additionally, this rotary tool is must be made of a type of material that allows heating and softening of both the material of the first dissimilar part, e.g. aluminium, and the material of the second dissimilar part, such as steel, without the tool undergoing geometric alterations. Therefore, in the selection of a material for said tool, a material with high mechanical strength and high resistance to temperature is opted for. Since the shoulder area of the tool with which the welded joint is made contacts the upper part of the first dissimilar part, which may be aluminium, it may be sufficient to manufacture said area in steel and maintain, as the tool head's, a material of high mechanical strength and high temperature resistance.

It can also be described how in step e), in which an advancing movement of the rotary tool along the joining area between the two parts is performed, this movement can be performed repeatedly along said joining area; so that the joining surface between the two dissimilar parts along said joint is increased, and thus the mechanical strength of the joint, wherein all these movements are fully automatable in a CNC (computerised numerical control) machine tool.

Finally, as a recommended working condition, it is described how during steps f) and/or g), the conventional welding process is performed such that the temperature measured in the interface between the portion of the first dissimilar part and the portion of the second dissimilar part of the joining area is less than 500 °C. Said temperature is associated with the use of aluminium material in the first dissimilar part, and steel material in the second dissimilar part, since below this temperature, the thus obtained unitary part presents optimum mechanical properties for its proper operation and implementation.

Thus, with the invention proposed a method for welding together dissimilar parts, suitable for joining two or more dissimilar parts in a novel, simple and fast way, ensuring a structural joining between respective parts, which is perfect for strength for the various loads applied, is obtained. Also obtained is a unitary part that combines the physical and mechanical characteristics of the respective parts, such as lightness and a very high mechanical strength; regardless of the size and volume of the unitary part to be obtained.

### DESCRIPTION OF THE DRAWINGS

To complete the description that is being be made and to assist in a better understanding of the invention's characteristics, according to a preferred practical embodiment thereof, accompanying as an integral part of said description, is a series of figures where, in an illustrative and non limiting way, the following is represented:
Figure 1 shows a cross-sectional view of the unitary part to be obtained by the method for welding together dissimilar parts subject matter of the invention, where the rotary tool is inserted in the first dissimilar part.
Figure 2 shows a cross-sectional view of the unitary part to be obtained by the method for welding together dissimilar parts subject matter of the invention, in which the rotary tool is performing the rotation and advance movement on respective parts and in a first pass.
Figures 3, 3A and 3B show cross-sectional views of the welding of additional parts obtained by the method for welding together dissimilar parts subject matter of the invention, in which once the welding of dissimilar parts is performed the fusion welds on the thus obtained unitary part are performed.

### PREFERRED MODE FOR CARRYING OUT THE INVENTION

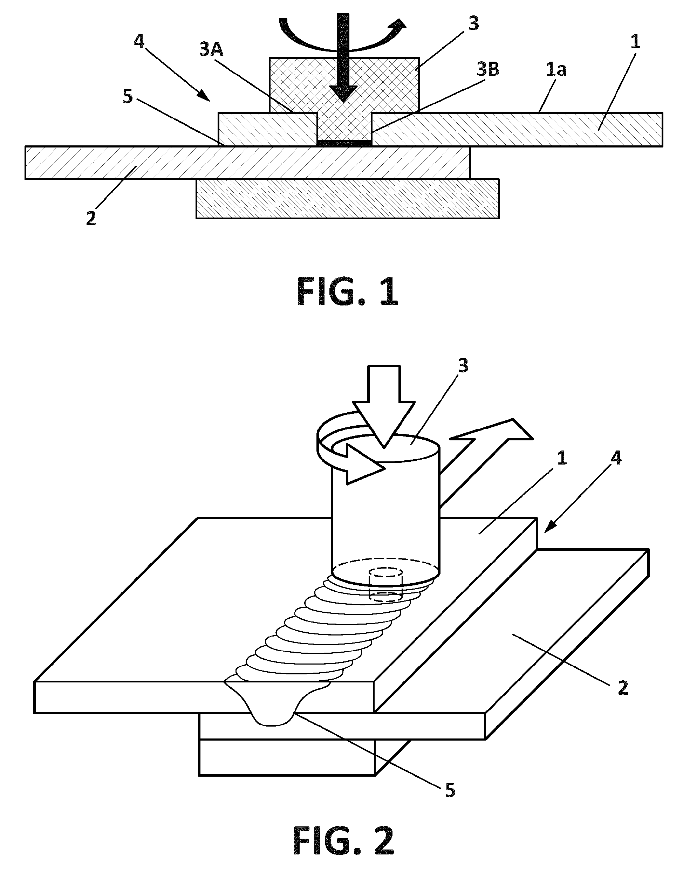

In view of Figures 1 and 2, it can be seen how the method for welding together dissimilar parts (1, 2), comprises the following steps:
a) arranging a pair of dissimilar parts on a work surface, by positioning a portion of the first dissimilar part (1) on a portion of the second dissimilar part (2), thus defining a joining area between the two parts; wherein the material of the first dissimilar part (1) is aluminium, and the material of the second dissimilar part (2) is steel;
b) positioning a rotary tool (3) on the first dissimilar part (1) and in line with the joining area between both parts;
c) performing a continuous rotating movement of the rotary tool (3) about a revolution axis of said tool;
d) performing a penetration movement of the rotary tool (3) until penetrating the thickness of the portion of the first dissimilar part (1) and, at most, 1 mm thickness of the portion of the dissimilar second part (2), wherein said penetration movement is combined with continuous rotation movement of the tool (3); and
e) performing an advancing movement of the rotary tool (3) along the joining area between the two parts, wherein said advancing movement is combined with the continuous rotation movement of the tool (3); where the advancing movement is made repeatedly along said joining area with a certain side movement resulting in friction stir welding of the joining area between the two dissimilar parts, obtaining a unitary part (4, 4', 4", 4"') formed by the two dissimilar parts of aluminium and steel.

It can be seen in both figures how the rotary tool (3) has a penetration head (3b); configured so that during step d) of penetration of the tool (3) down to the thickness of the first dissimilar part (1) and, at most, 1 mm of the second dissimilar part (2), the penetration head (3b) penetrates the first dissimilar part (1) until the shoulder area (3a) of the penetration head (3b) of the tool (3) contacts the outer surface (1a) of the first dissimilar part (1), opposite to the the surface in contact (5) with the second dissimilar part.

Additionally and due to the fact that the material of the first dissimilar part (1) is aluminium, and the material of the second dissimilar part (2) is steel, it is described how during steps f) and/or g), the conventional welding process is performed such that the temperature measured in the interface (5) between the portion of the first dissimilar part (1) and the portion of the second dissimilar part (2) of the joining area is less than 500 °C.

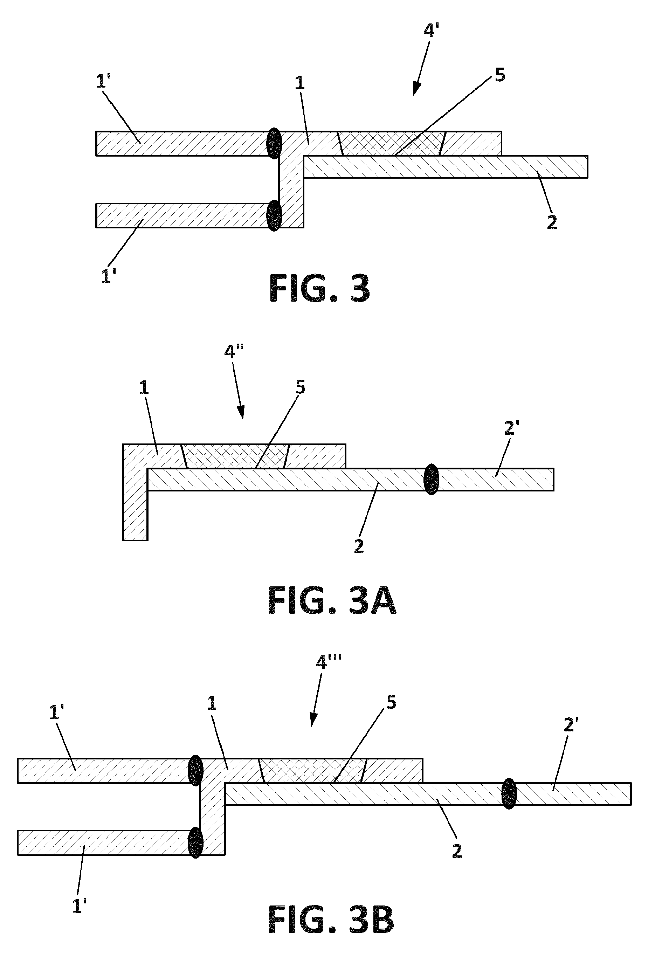

Next, and in view of Figures 3, 3A and 3B, it can be seen how after step e), and after removal of the rotary tool (3) from the joining area between the two dissimilar parts, the method comprises the following steps:
f) welding a part of the first dissimilar part (1) pertaining to the unitary part, to a third part (1') similar to the material of said first dissimilar part (1), through a conventional welding method, obtaining a second unitary part (4'); as can be seen in Figure 3; and
g) welding a part of the first dissimilar part (2) pertaining to the unitary part, to a fourth part (2') similar to the material of said second dissimilar part (2), through a conventional welding method, obtaining a third unitary part (4"); as can be seen in Figure 3A. In Figure 3B the combination described and associated with Figures 3 and 3A is depicted, obtaining a fourth unitary part (4"'). The conventional welding method of steps f) and g) comprises fusion welding, such as arc, resistance, laser, or gas welding.

Thus a unitary part comprising structural joining of said two dissimilar materials such as aluminium and steel is obtained; and according to the method for welding together dissimilar parts (1, 2) subject matter of the invention.

In view of this description and set of figures, a person skilled in the art will understand that embodiments of the invention that have been described can be combined in many ways within the scope of the invention. The invention has been described according to preferred embodiments thereof, but for a person skilled in the art it will be evident that multiple variations can be introduced in said preferred embodiments without exceeding the object of the claimed invention.

## Claims

1. A method for welding together dissimilar parts, **characterised in that** it comprises the following steps:
a) arranging a pair of dissimilar parts on a work surface, by positioning a portion of the first dissimilar part (1) on a portion of the second dissimilar part (2), by defining a joining area between the two parts;
b) positioning a rotary tool (3) on the first dissimilar part (1) and in line with the joining area between both parts;
c) performing a continuous rotating movement of the rotary tool (3) about a revolution axis of said tool;
d) performing a penetration movement of the rotary tool (3) until penetrating the thickness of the portion of the first dissimilar part (1) and, at most, 1 mm of the thickness of the portion of the second dissimilar part (2), wherein said penetration movement is combined with continuous rotation movement of the tool (3); and
e) performing an advancing movement of the rotary tool (3) along the joining area between the two parts, wherein said advancing movement is combined with the continuous rotation of the tool; resulting in friction stir welding of the joining area between the two dissimilar parts, thus obtaining a unitary part (4, 4', 4", 4"') formed by two dissimilar parts.

2. The method for welding together two dissimilar parts, according to Claim 1, **characterised in that** following step e), and after removal of the rotary tool (3) from the joining area between the two dissimilar parts, the method comprises the following steps:
f) welding at least a portion of the first dissimilar part (1) pertaining to the unitary part, to a third part similar to the material of said first dissimilar part (1), through a conventional welding method; and/or
g) welding at least a portion of the second dissimilar part (2) pertaining to the unitary part, to a fourth part (2') similar to the material of said second dissimilar part (2), through a conventional welding method.

3. The method for welding together two dissimilar parts, according to any of the preceding claims, **characterised in that** the rotary tool (3) comprises a penetration head (3b); configured so that during step d) of penetration of the tool (3) down to the thickness of the first dissimilar part (1) and, at most, 1 mm of the second dissimilar part (2), the penetration head (3b) penetrates the first dissimilar part (1) until the shoulder surface (3a) of the penetration head (3b) of the tool (3) contacts with the outer surface (1a) of the first dissimilar part (1), opposite to the surface in contact (5) with the second dissimilar part (2).

4. The method for welding together dissimilar parts, according to any of the preceding claims, **characterised in that** the material of the first dissimilar part (1) is aluminium, and the material of the second dissimilar part (2) is steel.

5. The method for welding together dissimilar parts, according to Claim 2 and any of the preceding claims, **characterised in that** the conventional welding method of steps f) and g) comprises fusion welding, such as arc, resistance, laser, or gas welding.

6. The method for welding together dissimilar parts, according to Claim 2 and any of the preceding claims, **characterised in that** during steps f) and/or g), the conventional welding method between dissimilar parts is performed such that the temperature measured in the interface (5) between the portion of the first dissimilar part (1) and the portion of the second dissimilar part (2) of the joining area is less than 500 °C.

7. The method for welding together dissimilar parts, according to any of the preceding claims, **characterised in that** step e), in which an advancing movement of the tool (3) rotating along the joining area between the two parts (1, 2), is performed repeatedly along the joining area.

8. The unitary part comprising structural joining of, at least, two dissimilar materials, according to the method for welding together dissimilar parts (1, 2) defined in any preceding claim.
